# EUROPÄISCHE PATENTANMELDUNG

(11) **EP 4 721 966 A1**
(43) Veröffentlichungstag der Anmeldung: **08.04.2026**
(21) Anmeldenummer: 25206051.2
(22) Anmeldetag: 01.10.2025
(51) Int. Cl.: B32B 5/02, B32B 5/26, B32B 27/12, B32B 27/16

(54) **SIEBDRUCK EINER RAS-LAGE IN EINEM FASERVERBUNDBAUTEIL**

(30) Priorität: 04.10.2024 DE 102024003226
(71) Anmelder: Diehl Defence GmbH & Co. KG, 88662 Überlingen (DE)
(72) Erfinder: Bähr, Markus, 91327 Gößweinstein (DE); Hintzen, Daniel, 88662 Überlingen (DE)
(74) Vertreter: Diehl Patentabteilung

(57) **Zusammenfassung**

Bei einem Faserverbundbauteil (6), das wenigstens zwei Lagen (8a-h) enthält, die in einem Lagenaufbau (10) angeordnet sind und mit Hilfe einer Matrix (12) zum Faserverbundbauteil (6) verbunden sind, wobei wenigstens eine der Lagen (8a-h) eine RAS-Lage (14) ist, wobei die RAS-Lage (14) eine Tragschicht (16) enthält, auf der mit Hilfe einer RAS-Tinte (18) in einem Siebdruckverfahren eine RAS-Struktur (20) aufgedruckt ist, ist die RAS-Struktur (20) elektrisch leitfähig und/oder ferromagnetisch.

Ein militärisches Objekt (2) enthält wenigstens ein Faserverbundbauteil (6).

Bei einem Verfahren (40) zur Herstellung des Faserverbundbauteils (6) werden die wenigstens zwei Lagen (8a-h) bereitgestellt und in dem Lagenaufbau (10) angeordnet und mit Hilfe der Matrix (12) zu dem Faserverbundbauteil (6) verbunden, wobei die RAS-Lage (14) dadurch breitgestellt wird, dass auf die Tragschicht (16) mit Hilfe der RAS-Tinte (18) in dem Siebdruckverfahren die RAS-Struktur (20) aufgedruckt wird.

## Beschreibung

Die Erfindung betrifft die Ausrüstung eines militärischen Objekts mit einem RAS-System (Radar absorbing structure) bzw. RAS-Eigenschaften bzw. die Einbringung einer hierfür geeigneten RAS-Struktur in ein entsprechendes Objekt.

Aus "Jeong, H., Nguyen, T.T. & Lim, S. Meta-Dome for Broadband Radar Absorbing Structure. Sci Rep 8, 17893 (2018). https://doi.org/10.1038/s41598-018-36273-8, Received 09 July 2018, Accepted 12 November 2018, Published 17 December 2018, DOI https://doi.org/10.1038/s41598-018-36273-8" ist ein Radom und ein Absorber bekannt mit einer Meta-Dome-Struktur für die Ultrabreitband-Radarabsorption, wobei ein dielektrisches FR-4-Material auf dem Metasurface-Absorber zum Schutz verwendet wurde.

Aufgabe der vorliegenden Erfindung ist es, Verbesserungen in Bezug auf die Ausrüstung eines militärischen Objekts mit dem RAS-System bzw. den RAS-Eigenschaften bzw. die Einbringung der RAS-Struktur in ein entsprechendes Objekt vorzuschlagen.

Die Aufgabe wird gelöst durch ein Faserverbundbauteil gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Faserverbundbauteil enthält wenigstens zwei Lagen. Die Lagen sind in einem Lagenaufbau angeordnet. Die Lagen sind mithilfe einer Matrix zum Faserverbundbauteil verbunden. Die Matrix ist insbesondere ein Harz.

Wenigstens eine der Lagen ist eine RAS-Lage (radar absorbing structure). Die RAS-Lage enthält eine Tragschicht. Auf der Tragschicht ist mithilfe einer RAS-Tinte in einem Siebdruckverfahren eine RAS-Struktur aufgedruckt. Die RAS-Struktur ist elektrisch leitfähig und / oder ferromagnetisch.

Die RAS-Struktur ist also die auf der Tragschicht aufgedruckte RAS-Tinte gebildet, gegebenenfalls in Zusammenwirkung mit der Tragschicht. Die Tinte enthält elektrisch leitfähige und / oder ferromagnetische Anteile zumindest in der Form, dass nach Fertigstellung mithilfe des Siebdruckverfahrens die RAS-Lage die entsprechend gewünschte elektrische Leitfähigkeit und / oder ferromagnetischen Eigenschaften aufweist.

Dank des Siebdruckverfahrens ist es möglich, Dicke und Geometrie der aufgedruckten RAS-Struktur auf die entsprechende Bauteilanwendung des Faserverbundbauteils und die benötigten elektromagnetischen Eigenschaften abzustimmen.

Durch das Siebdruckverfahren können feinste RAS-Strukturen hochpräzise geschaffen werden, z.B. im Bereich 100µm in flächiger Erstreckungsrichtung (X-/Y-Richtung) der Lage / Tragschicht und 2µm in Richtung senkrecht zur Fläche (Z-Richtung).

Dank der RAS-Strukturen können RCS Eigenschaften (Radarrückstreuquerschnitt, radar cross section) mithilfe des Siebdruckverfahrens in dem Faserverbundbauteil besonders günstig eingestellt werden. Durch den Einbau entsprechender Faserverbundbauteile können die RAS bzw. RCS Eigenschaften eines militärischen Objekts besonders einfach beeinflusst bzw. geschaffen werden.

In einer bevorzugten Ausführungsform ist die Tragschicht eine Folie oder ein Gewebe oder ein Vlies. Derartige Tragschichten eignen sich besonders gut für das Siebdruckverfahren.

In einer bevorzugten Ausführungsform ist in die RAS-Lage wenigstens ein Fließweg für eine Benetzung mit der Matrix eingebracht. Durch den Fließweg kann die Matrix bei der Herstellung des Faserverbundbauteils die RAS Schicht an den entsprechenden Stellen durchdringen, um die RAS-Lage zu benetzen und so das Faserverbundbauteil hoch qualitativ hergestellt werden. Entsprechende Fließwege werden zum Beispiel in Form einer Perforierung in die RAS Schicht eingebracht. Dies kann im Rahmen des Siebdruckverfahrens oder auch durch eine Nachbearbeitung der RAS-Lage nach Abschluss des Siebdruckverfahrens erfolgen. Mithilfe der Fließwege kann eine besonders hochqualitative Einbindung der RAS-Lage im Faserverbundbauteil gewährleistet werden.

In einer bevorzugten Ausführungsform weist die RAS-Lage wenigstens eine Positionierungshilfsstelle auf. Vermittels der Positionierungshilfsstellen ist die RAS-Lage in einer Sollposition in den Lagenaufbau eingebracht bzw. beim Lagenaufbau einbringbar. Die Positionierungshilfsstellen können entsprechend den Fließwegen oben sowohl direkt im Siebdruckverfahren oder durch Nachbehandlung in die RAS-Lage eingebracht werden. Entsprechende Positionierungshilfsstellen sind beispielsweise Ortsmarken oder Richtungsmarken / -anzeiger, z.B. Fadenkreuze oder Pfeile. So kann die RAS-Lage insbesondere in Relation zu weiteren Lagen im Lagenaufbau wie gewünscht bzw. gemäß geplantem Design, nämlich in der Sollposition, eingebracht werden. Somit ist die lagerichtige bzw. positionsrichtige Anordnung der RAS-Lage im Faserverbundbauteil gewährleistet.

In einer bevorzugten Ausführungsform ist wenigstens eine der Lagen eine elektrisch leitfähige Lage. Alternativ oder zusätzlich ist wenigstens eine der Lagen eine dielektrische Lage. Alternativ oder zusätzlich enthält das Faserverbundbauteil wenigstens ein dielektrisches Matrix-Faser-System. Die elektrische leitfähige Lage ist insbesondere eine elektrisch "vollleitfähige" Lage (z.B. Leitfähigkeit in Größenordnung von Aluminium, Kupfer, Silber, Gold), insbesondere elektrisch leitfähiger als die RAS Lage. Die dielektrische Lage weist gewünschte dielektrische Eigenschaften auf. Durch entsprechende Lagen oder Matrix-Faser-Systeme kann das Faserverbundbauteil hinsichtlich seiner elektromagnetischen Eigenschaften, insbesondere RAS-Eigenschaften bzw. RCS-Eigenschaften wunschgemäß gestaltet werden.

In einer bevorzugten Ausführungsform ist das Faserverbundbauteil ein Gradientenabsorber und oder ein Naumann-Absorber und oder ein Meta-Absorber. Mit anderen Worten können dank der Herstellung der RAS-Struktur im Siebdruckverfahren beliebige Absorbereigenschaften im Faserverbundbauteil hinsichtlich RAS bzw. RCS eingestellt werden. Insbesondere enthält die RAS-Lage eine Metastruktur, um die Meta-Absorber-Eigenschaften des Faserverbundbauteils zu erzeugen.

Die Aufgabe der Erfindung wird auch gelöst durch ein militärisches Objekt gemäß Patentanspruch 7. Dieses enthält wenigstens ein erfindungsgemäßes Faserverbundbauteil, wie es oben beschrieben wurde. Damit weist das Objekt - zumindest an der Stelle des verbauten Faserverbundbauteils - die oben beschriebenen günstigen RAS- bzw. RCS-Eigenschaften auf.

Das militärische Objekt und zumindest ein Teil dessen möglicher Ausführungsformen sowie die jeweiligen Vorteile wurden sinngemäß bereits im Zusammenhang mit dem erfindungsgemäßen Faserverbundbauteil erläutert.

In einer bevorzugten Ausführungsform ist das militärische Objekt ein Flugzeug oder ein Flugkörper oder ein Bodenfahrzeug oder eine Feuereinheit. Somit ergeben sich die oben genannten günstigen RAS- bzw. RCS-Eigenschaften auch für die entsprechenden Objekte.

Die Aufgabe der Erfindung wird auch gelöst durch ein Verfahren gemäß Patentanspruch 9. Dieses dient bzw. ist eingerichtet zur Herstellung des erfindungsgemäßen Faserverbundbauteils, wie es oben erläutert wurde.

Bei dem Verfahren werden die wenigstens zwei Lagen des Faserverbundbauteils bereitgestellt und in dem Lagenaufbau angeordnet und mithilfe der Matrix zu dem Faserverbundbauteil verbunden bzw. gefertigt.

In dem Verfahren wird dabei die RAS-Lage dadurch bereitgestellt, dass auf die Tragschicht mithilfe der RAS-Tinte in dem Siebdruckverfahren die RAS-Struktur aufgedruckt wird.

Durch den Einsatz des Siebdruckverfahrens bzw. der RAS-Tinte ergeben sich die oben erläuterten Vorteile für das Faserverbundbauteil bzw. das militärische Objekt.

Das Verfahren und zumindest ein Teil dessen möglicher Ausführungsformen sowie die jeweiligen Vorteile wurden sinngemäß bereits im Zusammenhang mit dem erfindungsgemäßen Faserverbundbauteil und dem militärischen Objekt erläutert.

In einer bevorzugten Ausführungsform wird das Faserverbundbauteil (bzw. der Lagenaufbau der Lagen im Faserverbundbauteil) mithilfe von Vakuum-Infusion oder Resin Transfer Molding (RTM) oder Nasswickeln oder einem Prepreg-Verfahren hergestellt. Somit kann die Herstellung der RAS-Lage mithilfe des Siebdruckverfahrens bzw. die entsprechende RAS-Struktur in gängige Herstellungsverfahren für Faserverbundbauteile integriert werden.

In einer bevorzugten Ausführungsform wird die RAS-Lage - nach ihrer Herstellung mithilfe des Siebdruckverfahrens, also nach Abschluss des Siebdruckverfahrens - und vor Einbringen in den Lagenaufbau hinsichtlich ihrer Drapierbarkeit im Lagenaufbau nachbehandelt. Dadurch wird es möglich, die RAS-Lage wunschgemäß im Lagenaufbau zu drapieren, um einen wunschgemäßen Lagenaufbau bzw. ein wunschgemäßes Faserverbundbauteil herstellen zu können.

In einer bevorzugten Variante dieser Ausführungsform - in Kombination mit der entsprechenden oben genannten Ausführungsform des Faserverbundbauteils - wird die RAS-Lage dadurch nachbehandelt, dass wenigstens einer der Fließwege für die Matrix und / oder wenigstens eine der Positionierungshilfsstellen in die RAS-Lage eingebracht werden. Somit können Fließwege und / oder Positionierungshilfsstellen besonders einfach in die RAS-Lage eingebracht werden.

In einer bevorzugten Ausführungsform des Verfahrens - in Kombination mit der entsprechenden oben genannten Ausführungsform des Faserverbundbauteils - wird wenigstens einer der Fließwege und / oder wenigstens eine der Positionierungshilfen mittels Laser oder mechanischem Werkzeug in die RAS-Lage eingebracht. Dies kann im Rahmen einer oben genannten Nachbehandlung oder direkt bei der Herstellung der RAS-Lage (also im Rahmen der Ausführung des Siebdruckverfahrens, vor dessen Beendigung) erfolgen. Als Werkzeug eignet sich insbesondere ein Messer oder Cutter. So können die Fließwege und / oder Positionierungshilfen besonders einfach in die RAS-Lage eingebracht werden.

In einer bevorzugten Ausführungsform des Verfahrens - in Kombination mit der entsprechenden oben genannten Ausführungsform des Faserverbundbauteils - werden die (voll)leitfähige Lage und / oder die wenigstens eine dielektrische Lage und / oder das wenigstens eine dielektrische Matrix-Faser-System in Form von Fasern und / oder Faserhalbzeugen in das Faserverbundbauteil bzw. den Lagenaufbau eingebracht. So können die entsprechenden Lagen und / oder das Matrix-Faser-System besonders günstig in das Faserverbundbauteil eingebracht werden.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich ein RAS Fertigungsverfahren.

Es werden Radar Absorbing Structures(RAS) zur Beeinflussung des Radarrückstreuquerschnitts (RCS), durch eine tragende Struktur verwendet. Es wird ein Verfahren beschrieben, um RAS Bauteile, last- und RCS-abhängig herzustellen. Zur Steigerung der Leistungsfähigkeit bei den RCS-Eigenschaften können Meta-Strukturen integriert werden.

Die Erfindung beruht auf der Erkenntnis von steigenden Anforderungen an die RCS-Eigenschaften von militärischen Produkten (Objekten).

Die Erfindung beruht auf der Beobachtung, dass es aus der Praxis bisher bekannt ist, dass RAS-Systeme durch Zusetzen von Partikeln in Faserverbundstrukturen oder über das Fügen von Schichten aus unterschiedlichen Materialien hergestellt werden. Die geometrischen Freiheiten und die mechanische Tragfähigkeit sind dabei eingeschränkt.

Die Erfindung beruht auf der Idee, Gewebe oder Folien (Tragschicht) mit einem hoch präzisen Druckverfahren (Siebdruck) mit elektrisch leitfähigen und ferromagnetischen Materialien zu bedrucken. Diese werden dann, um eine optimale Drapierbarkeit zu erreichen, insbesondere nachbehandelt und in den Lagenaufbau eines Faserverbundes eingebaut. Dieser kann z.B. mittels Vakuum Infusion, Resin Transfer Molding oder Nasswickeln aufgebaut werden.

Dieses Verfahren ermöglicht es, in den Standardherstellungsprozessen des Faserverbundes präzise elektromagnetische Eigenschaften herzustellen. Gradienten Absorber, Jaumann Absorber und Meta Absorber sind gleichermaßen herstellbar.

Die Erfindung verbessert die Nachteile bisheriger aus der Praxis bekannter Verfahren, die entweder bei der geometrischen Freiheit, der mechanischen Leistungsfähigkeit oder bei der Anpassung der RCS Eigenschaften eingeschränkt sind.

Die Erfindung liefert RAS für Flugzeug- und Flugkörperstrukturen sowie RAS für militärische Bodenfahrzeuge und Feuereinheiten.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: einen Ausschnitt aus einem militärische Objekt mit dessen Faserverbundbauteil in Explosionsdarstellung und einer Detailansicht einer RAS-Lage des Faserverbundbauteils,
- Figur 2: ein Flussdiagramm eines Verfahrens zur Herstellung des Faserverbundbauteils aus Figur 1
- Figur 3: eine Siebdruckeinrichtung zur Herstellung der RAS-Lage.

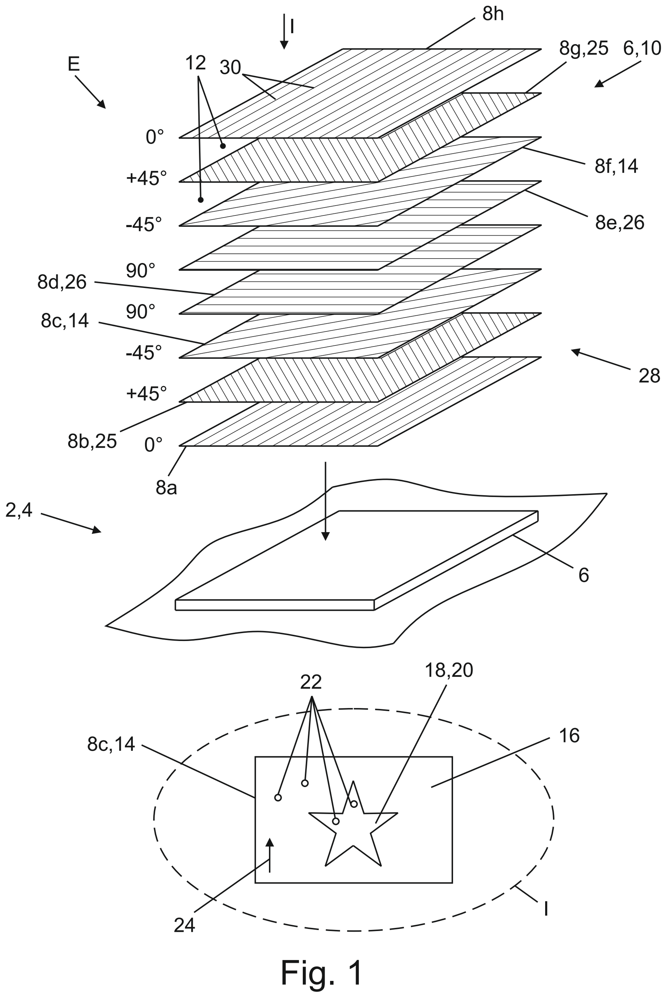

Figur 1 zeigt stark symbolisiert einen Ausschnitt aus einem militärischen Objekt 2, hier einem Flugzeug, nämlich einen Teil von dessen Außenwand. Die Außenwand 4 enthält eine Reihe von Faserverbundbauteilen 6, von welchen hier exemplarisch lediglich eines dargestellt ist.

Das Faserverbundbauteil 6 ist sowohl im endgefertigten und im Objekt 2 eingebauten Zustand als auch (in Figur 1 darüber, gekennzeichnet durch einen symbolischen Pfeil) in einer Explosionsdarstellung nochmals zur Verdeutlichung in Figur 1 dargestellt. Der Explosionsdarstellung ist dabei insbesondere folgendes zu entnehmen:
Das Faserverbundbauteil 6 enthält insgesamt acht Lagen 8a-h, die in dem dargestellten Lagenaufbau 10 (durch einen Pfeil symbolisiert) angeordnet sind und mithilfe einer Matrix 12, hier einem Harz, zu dem fertigen Faserverbundbauteil 6 verbunden sind. Die Matrix 12 ist hier nur symbolisch angedeutet und umgibt und durchdringt die Lagen 8a-h in fachüblicher Weise. Die Lagen 8c und 8f sind hier RAS-Lagen 14.

Figur 1 zeigt exemplarisch die Lage 8c bzw. RAS-Lage 14 nochmals in Draufsicht in Richtung des Pfeils I im Detail. Die RAS-Lage 14 enthält eine Tragschicht 16, hier eine Folie. Auf der Tragschicht ist mithilfe einer RAS-Tinte 18 eine RAS-Struktur 20 mithilfe eines Siebdruckverfahrens aufgedruckt. Die RAS-Struktur 20 ist hier symbolisch als eine Sternform dargestellt. Die RAS-Struktur 20 ist elektrisch leitfähig und ferromagnetisch, da die RAS-Tinte 18 sowohl elektrisch leitfähige als auch ferromagnetische Anteile enthält. In die RAS-Lage 14 sind Fließwege 22, hier in Form einer Perforierung eingebracht. Diese sind Fließwege 22 für die Matrix 12, so dass eine Benetzung der RAS-Lage 14 mit der Matrix 12 bei der Herstellung des Faserverbundbauteils 6 erfolgen kann.

Die RAS-Lage 14 enthält außerdem eine Positionierungshilfsstelle 24, hier in Form eines aufgedruckten Pfeiles, welcher eine Orientierung der RAS-Struktur 20 in der RAS-Lage 14 gekennzeichnet. Die Positionierungshilfsstelle 24 dient dazu, beim Schichten des Lagenaufbaus 10 des Faserverbundbauteils 6 die Lagen 8a-h und vor allem die RAS Lagen 14 in der jeweils gewünschten Positionierung und Orientierung in den Lagenaufbau 10 zu integrieren.

In Figur 1 ist die gewünschte Orientierung durch Schraffierungen symbolisch dargestellt, wobei rein beispielhaft die Lagen 8a,h eine 0°-Orientierung, die Lagen 8b,g eine plus-45°-Orientierung, die Lagen 8c,f eine minus-45°-Orientierung und die Lagen 8d,e eine 90°-Orientierung aufweisen.

Im Lagenaufbau 10 sind weiterhin die Lagen 8b,g elektrisch vollleitfähige Lagen 25 ("Vollleitfähig" heißt, dass deren Leitfähigkeit größer als die der RAS-Lagen 14 ist) sowie die Lagen 8d,e dielektrische Lagen 26.

Außerdem enthält das Faserverbundbauteil 6 ein dielektrisches Matrix-Faser-System 28, welches hier nur symbolisch durch einen Pfeil angedeutet ist und sowohl die Matrix 12 als auch hier nur angedeutete Fasern 30 in den Lagen 8a,h enthält.

Das Faserverbundbauteil 6 ist hier durch entsprechende Gestaltung der RAS Strukturen 20 als Gradientenabsorber ausgeführt.

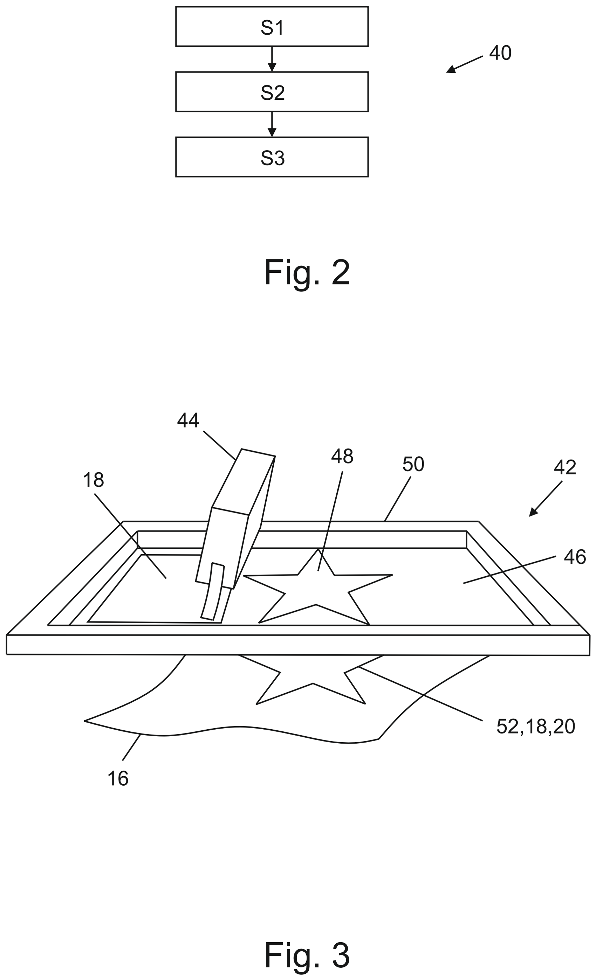

Figur 2 zeigt symbolisch ein Verfahren 40 zur Herstellung des Faserverbundbauteils 6 aus Figur 1.

In einem Schritt S1 werden zunächst die RAS Lagen 14 dadurch bereitgestellt, dass auf die Tragschicht 16 mithilfe der RAS-Tinte 18 in dem Siebdruckverfahren die RAS-Struktur 20 aufgedruckt wird.

Die Positionierungshilfe 24 wird ebenfalls im Schritt S1 bereits im Rahmen des Siebdruckverfahrens erzeugt.

In einem Schritt S2 - also nach ihrer Herstellung mithilfe des Siebdruckverfahrens - werden die RAS-Lagen 14 hinsichtlich ihrer Drapierbarkeit im Lagenaufbau 10 nachbehandelt. Dies geschieht dadurch, dass die Fließwege 22 für die Matrix 12 in die RAS-Lage 14 eingebracht werden. Dies geschieht hier mittels eines nicht dargestellten Lasers. Die Nachbehandlung erfolgt außerdem vor Einbringen in den Lagenaufbau 10 (Schritt S3, siehe unten).

In einem Schritt S3 werden nun die Lagen 8a-h bereitgestellt und in dem Lagenaufbau 10 angeordnet und mithilfe der Matrix 12 zu dem Faserverbundbauteil 6 verbunden. Im Schritt S3 werden dabei neben den inzwischen bedruckten und nachbearbeiteten RAS-Lagen 14 auch die voll leitfähigen Lagen 24 sowie die dielektrischen Lagen 26 sowie das Matrix-Faser-System 28 (in Form von Fasern 30 und Matrix12), teils als Faserhalbzeuge (Lagen 24 und 26) in das Faserverbundbauteil 6 eingebracht.

Das Faserverbundbauteil 6 wird vorliegend mithilfe von Vakuuminfusion hergestellt.

Figur 3 erläutert einen Siebdruckaufbau 42 bzw. eine Siebdruckeinrichtung. Diese enthält einen Rahmen 50. Hier ist symbolisch dargestellt, wie eine Farbe in Form der RAS-Tinte 18 mithilfe eines Rakels 44 auf ein im Rahmen 50 gehaltenes Sieb 46 aufgebracht wird. Das Sieb 46 enthält eine Kopierschicht, welche offene Siebstellen 48 in Form der RAS-Struktur 20 aufweist. Nur an den Siebstellen 48 kann die RAS-Tinte das Sieb 46 passieren (in der Figur nach unten, durch Pfeile angedeutet).

Symbolisch dargestellt ist schließlich ein Druckergebnis 52, nämlich die RAS-Struktur 20, die sich durch die RAS-Tinte 18 ergibt, welche durch die offenen Siebstellen 48 auf die hier nur symbolisch angedeutete Tragschicht 16 gelangt ist.

### Bezugszeichenliste

- 2: Objekt (militärisch)
- 4: Außenwand
- 6: Faserverbundbauteil
- 8a-h: Lage
- 10: Lagenaufbau
- 12: Matrix
- 14: RAS-Lage
- 16: Tragschicht
- 18: RAS-Tinte
- 20: RAS-Struktur
- 22: Fließweg
- 24: Positionierungshilfsstelle
- 25: Lage (elektrisch vollleitfähig)
- 26: Lage (dielektrisch)
- 28: Matrix-Faser-System
- 30: Faser
- 40: Verfahren
- 42: Siebdruckaufbau
- 44: Rakel
- 46: Sieb
- 48: Siebstellen (offen)
- 50: Rahmen
- 52: Druckergebnis
- S1-3: Schritt
- E: Explosionsdarstellung

## Patentansprüche

1. Faserverbundbauteil (6),
- das wenigstens zwei Lagen (8a-h) enthält, die in einem Lagenaufbau (10) angeordnet sind und mit Hilfe einer Matrix (12) zum Faserverbundbauteil (6) verbunden sind,
- wobei wenigstens eine der Lagen (8a-h) eine RAS-Lage (14) ist,
- wobei die RAS-Lage (14) eine Tragschicht (16) enthält, auf der mit Hilfe einer RAS-Tinte (18) in einem Siebdruckverfahren eine RAS-Struktur (20) aufgedruckt ist,
- wobei die RAS-Struktur (20) elektrisch leitfähig und/oder ferromagnetisch ist.

2. Faserverbundbauteil (6) nach Anspruch 1,
**dadurch gekennzeichnet,**
**dass** die Tragschicht (16) eine Folie oder ein Gewebe oder Vlies ist.

3. Faserverbundbauteil (6) nach einem der vorhergehenden Ansprüche,
**dadurch gekennzeichnet,**
**dass** in die RAS-Lage (14) wenigstens ein Fließweg (22) für eine Benetzung mit der Matrix (12) eingebracht ist.

4. Faserverbundbauteil (6) nach einem der vorhergehenden Ansprüche,
**dadurch gekennzeichnet,**
**dass** die RAS-Lage (14) wenigstens eine Positionierungshilfsstelle (24) aufweist, vermittels dieser die RAS-Lage (14) in einer Soll-Position in den Lagenaufbau (10) eingebracht ist.

5. Faserverbundbauteil (6) nach einem der vorhergehenden Ansprüche,
**dadurch gekennzeichnet,**
**dass** wenigstens eine der Lagen (8a-h) eine elektrisch leitfähige Lage (25) und/oder eine dielektrische Lage (26) ist und/oder das Faserverbundbauteil (6) wenigstens ein dielektrisches Matrix-Faser-System (28) enthält.

6. Faserverbundbauteil (6) nach einem der vorhergehenden Ansprüche,
**dadurch gekennzeichnet,**
**dass** das Faserverbundbauteil (6) ein Gradienten-Absorber und/oder Naumann-Absorber und/oder Meta-Absorber ist.

7. Militärisches Objekt (2),
das wenigstens ein Faserverbundbauteil (6) nach einem der vorhergehenden Ansprüche enthält.

8. Objekt (2) nach Anspruch 7,
**dadurch gekennzeichnet,**
**dass** das Objekt (2) ein Flugzeug oder Flugkörper oder Bodenfahrzeug oder eine Feuereinheit ist.

9. Verfahren (40) zur Herstellung des Faserverbundbauteils (6) nach einem der Ansprüche 1 bis 6, bei dem:
- die wenigstens zwei Lagen (8a-h) bereitgestellt und in dem Lagenaufbau (10) angeordnet und mit Hilfe der Matrix (12) zu dem Faserverbundbauteil (6) verbunden werden,
- wobei die RAS-Lage (14) dadurch breitgestellt wird, dass auf die Tragschicht (16) mit Hilfe der RAS-Tinte (18) in dem Siebdruckverfahren die RAS-Struktur (20) aufgedruckt wird.

10. Verfahren (40) nach Anspruch 9,
**dadurch gekennzeichnet,**
**dass** das Faserverbundbauteil (6) mit Hilfe von Vakuum-Infusion oder Resin Transfer Molding oder Nasswickeln oder einem Prepreg-Verfahren hergestellt wird.

11. Verfahren (40) nach einem der Ansprüche 9 bis 10,
**dadurch gekennzeichnet,**
**dass** die RAS-Lage (14) nach ihrer Herstellung mit Hilfe des Siebdruckverfahrens und vor Einbringen in den Lagenaufbau (10) hinsichtlich ihrer Drapierbarkeit im Lagenaufbau (10) nachbehandelt wird.

12. Verfahren (40) nach Anspruch 11 in Verbindung mit Anspruch 3 und/oder Anspruch 4,
**dadurch gekennzeichnet,**
**dass** die RAS-Lage (14) dadurch nachbehandelt wird, dass wenigstens einer der Fließwege (22) für die Matrix (12) und/oder wenigstens eine der Positionierungshilfsstellen (24) in die RAS-Lage (14) eingebracht werden.

13. Verfahren (40) nach einem der Ansprüche 9 bis 12 in Verbindung mit Anspruch 3 und/oder Anspruch 4,
**dadurch gekennzeichnet,**
**dass** wenigstens einer der Fließwege (22) und/oder wenigstens eine der Positionierungshilfsstellen (24) mittels Laser oder mechanischem Werkzeug in die RAS-Lage (14) eingebracht werden.

14. Verfahren (40) nach einem der Ansprüche 9 bis 13 in Verbindung mit Anspruch 5,
**dadurch gekennzeichnet,**
**dass** die leitfähige Lage (25) und/oder die wenigstens eine dielektrische Lage (26) und/oder das wenigstens eine dielektrisches Matrix-Faser-System (28) in Form von Fasern (30) und/oder Faserhalbzeugen in das Faserverbundbauteil (6) eingebracht werden.
